Europäisches Patentamt

European Patent Office

Office européen des brevets

(19)

(11) Veröffentlichungsnummer: **0 025 558**
B1

(12) # EUROPÄISCHE PATENTSCHRIFT

(45) Veröffentlichungstag der Patentschrift:
18.05.83

(51) Int. Cl.³: **B 60 T 13/38**

(21) Anmeldenummer: **80105258.0**

(22) Anmeldetag: **04.09.80**

(54) **Entlüftungsvorrichtung für einen kombinierten Betriebsbrems- und Federspeicherbremszylinder.**

(30) Priorität: **12.09.79 DE 2936899**

(43) Veröffentlichungstag der Anmeldung:
**25.03.81 Patentblatt 81/12**

(45) Bekanntmachung des Hinweises auf die Patenterteilung:
**18.05.83 Patentblatt 83/20**

(84) Benannte Vertragsstaaten:
**AT CH FR GB IT LI NL SE**

(56) Entgegenhaltungen:

**AT-B-322 394**
**DE-A-2 308 838**
**DE-A-2 316 594**
**FR-A-1 599 539**
**US-A-2 868 492**

(73) Patentinhaber: **Knorr-Bremse GmbH, Moosacher Strasse 80, D-8000 München 40 (DE)**

(72) Erfinder: **Lechner, Anton, Dr., Eichenweg 6, D-8043 Unterföhring (DE)**

Entlüftungsvorrichtung für einen kombinierten Betriebsbrems- und Federspeicherbremszylinder

Die Erfindung betrifft eine Entlüftungsvorrichtung nach dem Oberbegriff des Patentanspruches 1.

Bei der Entwicklung von kombinierten Betriebsbrems- und Federspeicherbremszylindern ist man seit längerem bestrebt, die Be- und Entlüftung der verschiedenen Zylinderräume so vorzunehmen, dass diese nicht verschmutzen und korrodieren können.

Es sind Entlüftungseinrichtungen bekannt (FR-PS 1 599 539), bei welchen die Möglichkeit geschaffen ist, bei Betätigung der Federspeicherbremse das sich in der Federkammer vergrössernde Volumen mit Luft aus der Druckkammer des Betriebsbremszylinders zu belüften. Die mit dem Kolben des Federspeicherbremszylinders verbundene und bei Betätigung des Federspeicherbremszylinders in den Betriebsbremszylinder ausfahrende Kolbenstange ist bei derartigen Anordnungen hohl ausgebildet, wobei der Kopf der Kolbenstange ein Druckstück trägt, über welches Luft von Atmosphärendruck aus der Druckkammer des Betriebsbremszylinders nach Passieren der hohlen Kolbenstange über einen Durchlass in die die Speicherfeder des Federspeicherbremszylinders aufnehmende Federkammer gelangen kann. Durch Ventileinrichtungen ist hierbei Vorsorge getroffen, dass entweder nur die Federspeicherbremse oder nur die Betriebsbremse wirksam werden können. Die im Inneren des Druckstückes die Verbindung zwischen der Federkammer des Federspeicherbremszylinders und der Druckkammer des Betriebsbremszylinders steuernde Ventileinrichtung arbeitet jedoch nicht in jedem Falle zuverlässig, da die Öffnungs- und Schliessbewegungen der Ventileinrichtung von der Anschlagposition des im Betriebsbremszylinder vorgesehenen Membrantellers bzw. von der auf dem Membranteller aufliegenden Vollmembran abhängen.

Davon ausgehend besteht die Aufgabe der Erfindung darin, eine Entlüftungsvorrichtung der in Rede stehenden Art so auszubilden, dass der bei Betätigung des Federspeicherbremszylinders erwünschte Druckausgleich in der im Volumen sich vergrössernden Federkammer immer sichergestellt ist, selbst dann, wenn in der Federkammer und der mit der Federkammer in Verbindung stehenden hohlen Kolbenstange ein plötzlich sich aufbauender starker Unterdruck bei ausfahrender Kolbenstange entstehen sollte. Insbesondere soll der Druckausgleich durch Verbindung der Betriebskammer des Betriebsbremszylinders und der Federkammer des Federspeicherbremszylinders sichergestellt sein, ohne dass es einer Anschlagposition gegenüber dem im Betriebsbremszylinder vorgesehenen Membranteller bedarf.

Die Lösung dieser Aufgabe kennzeichnet sich durch die Merkmale nach dem Kennzeichnungsteil des Patentanspruches 1.

Mit Hilfe des baulich einfachen, zwischen der Membrane und dem Verschlussdeckel gebildeten Druckspeichers ist eine Einrichtung geschaffen, welche im wesentlichen unbeeinflusst von äusseren Betriebsbedingungen verwendbar ist, um die zum Öffnen des Ventils der Ventileinrichtung erforderliche Kraft abzugeben, wenn der durch Volumenvergrösserung in der Federkammer entstehende Unterdruck bei Ausfahren der Kolbenstange des Federspeicherbremszylinders gross genug ist. Es bedarf keiner Anschlagelemente, um das Ventil zu öffnen bzw. zu schliessen, da die Kraft des vorgenannten Druckspeichers und der den Ventilkörper verspannenden Feder ohne weiteres ausreichen, um bei Bestehen eines Unterdruckes das Ventil der Entlüftungs- bzw. Belüftungseinrichtung zu öffnen bzw. um dieses zu schliessen. Die Bauteile der Ventileinrichtung sind von konstruktiv einfacher Art, was auch für den Druckspeicher, bestehend aus dem Verschlussdeckel und aus der Membrane zutrifft. Die meisten Bauteile der Ventileinrichtung können in kostensparender Weise aus Kunststoff gefertigt werden, ohne dass es besonderer Bearbeitungen bedarf. Aus diesem Grunde arbeitet die Ventileinrichtung auch im wesentlichen unbeeinflusst von starken Temperaturunterschieden, insbesondere deshalb, weil die Funktionsfähigkeit des Druckspeichers hiervon nahezu unbeeinflusst bleibt.

Vorteilhafte Ausgestaltungen und Weiterbildungen des Anmeldungsgegenstandes sind in weiteren Patentansprüchen aufgeführt.

Die Erfindung ist nachfolgend anhand eines Ausführungsbeispiels unter Bezugnahme auf die beigefügte Zeichnung erläutert.

Fig. 1 ist eine schematische Schnittansicht eines kombinierten Betriebsbrems- und Federspeicherbremszylinders unter Verwendung der Entlüftungsvorrichtung nach der Erfindung;

Fig. 2 ist eine vergrösserte Schnittansicht der in der Anordnung nach Fig. 1 verwendeten Entlüftungsvorrichtung gemäss der Erfindung.

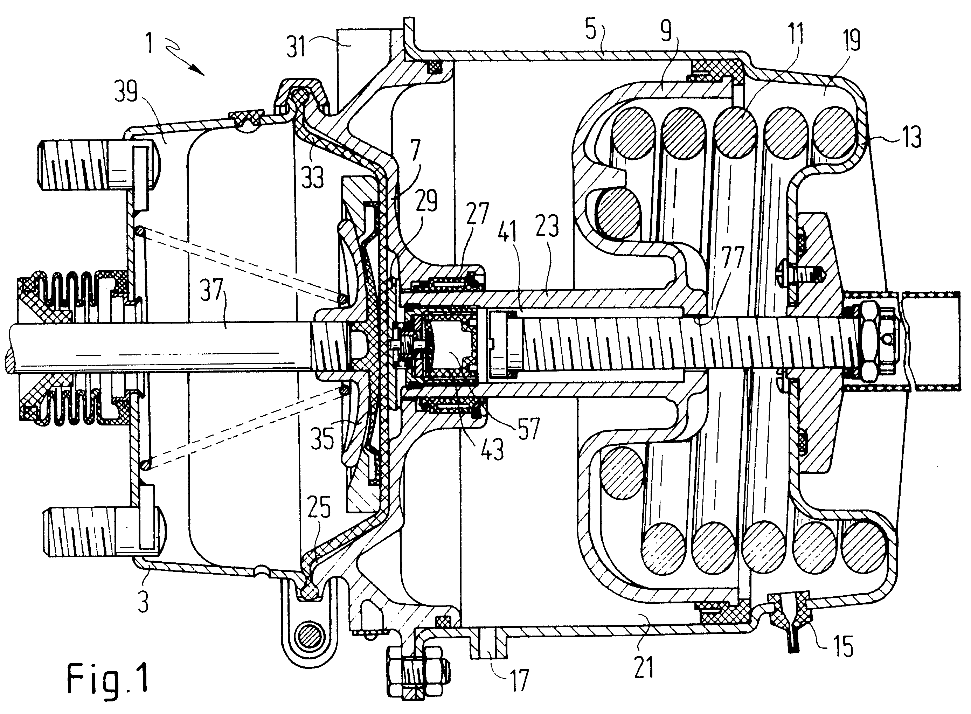

In Fig. 1 der Zeichnung ist ein kombinierter Betriebsbrems- und Federspeicherbremszylinder, nachfolgend Kombizylinder 1 benannt, dargestellt. Der Kombizylinder besteht aus dem Betriebsbremszylinder 3 und dem Federspeicherbremszylinder 5, welche durch eine Zwischenwand 7 voneinander getrennt sind. Innerhalb des Federspeicherbremszylinders ist ein Kolben 9 verschiebbar angeordnet, wobei an einer Seite des Kolbens 9 eine Speicherfeder 11 anliegt. Die Speicherfeder 11 stützt sich an ihrer entgegengesetzten Seite am Boden 13 des Federspeicherbremszylinders 5 an. In den Boden 13 ist ein Druckentlastungsventil 15 von an sich bekannter Konstruktion eingesetzt. In die gemäss Fig. 1 links bezüglich des Kolbens 9 bestehende Kammer mündet ein Einlass 17, über welchen Druckmittel eingeleitet wird, um den Kolben 9 unter Verspannung der Speicherfeder 11 nach rechts gerichtet zu verschieben. Bei dieser Verschiebung des Kolbens 9 wird die Luft, welche innerhalb der die Speicherfeder 11 aufnehmenden Federkammer 19 besteht, über das Druckentlastungsventil 15 herausgedrückt. Wird dagegen der Druck in der Druckkammer 21 des Federspeicherbremszylinders bei Betätigung eines an sich bekannten, an den Einlass 17 angeschlossenen Ventils entlastet, dann vermag die Speicherfeder 11 den Kolben 9 gemäss Darstellung in Fig. 1 nach links gerichtet zu verschieben.

Der Kolben 9 ist mit einer Kolbenstange 23 verbunden, welche sich durch die Zwischenwand 7 in den Bereich der Druckkammer 25 des Betriebsbremszylinders 3 erstreckt. Eine in die Zwischenwand 7 eingesetzte Dichtung 27 dichtet gegenüber der Aussenwand der Kolbenstange während Längsbewegungen derselben ab. Die Kolbenstange trägt an ihrem vorderen, in den Bereich der Druckkammer 25 sich erstreckenden Ende ein Druckstück 29 von nachfolgend im einzelnen dargestellter und erläuterter Konstruktion. In die Druckkammer 25 mündet ein Einlass 31, über welchen zur Betätigung der Betriebsbremse Druckmittel, so Druckluft, eingelassen wird. Diese Druckluft wirkt auf die innerhalb des Betriebsbremszylinders 3 eingesetzte Membrane 33 ein, an deren entgegengesetzter Seite ein Druckstück in Form eines Kolbenstangenkopfes 35 vorgesehen ist. Der Kolbenstangenkopf steht mit einer Kolbenstange 37 in Verbindung, die sich aus der links bezüglich der Membrane 33 bestehenden Kammer 39 des Betriebsbremszylinders 3 erstreckt und (in nicht dargestellter Weise) mit einem Bremsbetätigungsmechanismus ausserhalb des Kombizylinders 1 in Verbindung steht. Hierbei kann es sich beispielsweise um die Betätigungsteile einer Keilspreizbremse oder einer S-Nockenbremse eines Kraftfahrzeugs handeln. Wird die Betriebsbremse durch Einleiten von Druckluft in den Einlass 31 betätigt, dann verschiebt die Druckluft die Membrane 33, den Kolbenstangenkopf 35 und die Kolbenstange 37 gemäss Darstellung nach links gerichtet, derart, dass die an die Kolbenstange angeschlossenen Bremsbetätigungsteile in Wirkung kommen und die Bremse des Kraftfahrzeugs anlegen. Während dieser normalen Betriebsbremsung verbleibt die Federspeicherbremse in ihrer inaktiven Position, in welcher die Speicherfeder 11 durch Halten des Drucks in der Druckkammer 21 zusammengedrückt ist. Die Federspeicherbremse kann verwendet werden, wenn die Betriebsbremse ausfällt, wenn also die Druckmittelverbindung in den Einlass 31 unterbrochen ist, oder wenn sie als sogenannte Feststellbremse benutzt werden soll. In diesem Fall wirkt sie als Parkbremse bei einem abgestellten Fahrzeug.

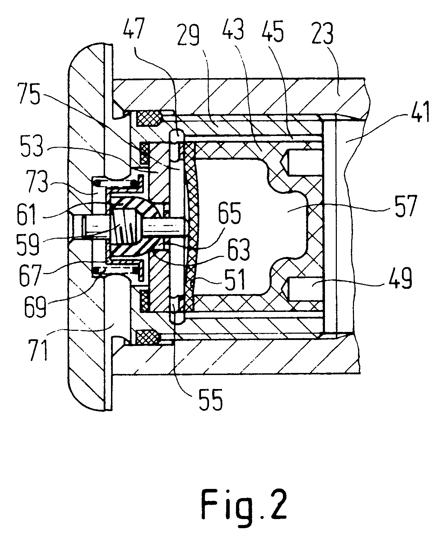

Das vorstehend genannte Druckstück 29 ist unter Abdichtung am Ende der Kolbenstange 23 befestigt, welche in ihrem Inneren einen Kanal 41 aufweist. So ist das Druckstück 29 gemäss Darstellung unter Verwendung eines Dichtungselements in das offene Ende der Kolbenstange 23 eingeschraubt. Das Druckstück enthält gemäss Fig. 2 eine innere Ausnehmung, in welche ein Verschlussdeckel 43 eingeschraubt ist. Hierbei sind am Aussenumfang des Verschlussdeckels 43 jeweils unter Winkelabstand Lüftungsschlitze 45 vorgesehen. Diese Lüftungsschlitze enden in einer am Innenumfang der Ausnehmung im Druckstück 29 verlaufenden Nut 47, d.h., dass die Nut 47 über die Lüftungsschlitze 45 ständig mit dem Kanal 41 in offener Verbindung steht. Der vorgenannte Verschlussdeckel 43 weist beispielsweise Sackbohrungen 49 auf, in welche ein Werkzeug einführbar ist, um den Verschlussdeckel gegenüber einer am gemäss Darstellung linken Ende anliegenden Membrane 51 zu verspannen. An der entgegengesetzten Seite der Membrane ist eine aus Kunststoff oder Metall bestehende Scheibe 53 vorgesehen, welche einen Bohrungen 55 enthaltenden, axial auskragenden Ring aufweist. Die Membrane 51, welche aus Gummi und verstärkendem Gewebe bestehen kann, wird unter atmosphärischen Bedingungen mit Hilfe des vorgenannten Verschlussdeckels 43 luftdicht gegenüber der Scheibe 53 verspannt, derart, dass in der durch die Membrane 51 und durch den Verschlussdeckel 43 umschlossenen Kammer 57 Atmosphärendruck herrscht. An der gemäss Darstellung nach Fig. 2 linken Seite der Membrane 51 liegt ein Stössel 59 an, auf welchen luftdicht ein z.B. aus Vollgummi bestehender Ventilkörper 61 aufgeschraubt ist. Der Ventilkörper 61 wirkt gegenüber einem Ventilsitz 63, der durch das zugewandte Ende einer die Scheibe 53 durchsetzenden Bohrung 65 gebildet ist.

Am gemäss Darstellung nach Fig. 2 linken Ende des Ventilkörpers 61 liegt ein Federteller 67 an, welcher unter der Verspannung einer sich gleichzeitig am Druckstück 29 abstützenden Feder 69 steht. Die Feder 69 drückt demnach ständig gegen den Ventilkörper 61 und somit gegen den Stössel 59 an, um diesen in der Darstellung nach rechts gerichtet zu verschieben. Vorteilhafterweise ist der Stössel 59 am bezüglich der Membrane 51 entgegengesetzten Ende unter Passung in einer Bohrung des Druckstücks geführt. In den den Federteller 67 aufnehmenden Innenbereich des Druckstückes münden unter Winkelabstand angeordnete Bohrungen 71; diese Bohrungen stellen die Verbindung zwischen der Druckkammer 25 des Betriebsbremszylinders (Fig. 1) und der die Feder 69 bzw. den Ventilkörper 61 aufnehmenden Kammer 73 im Druckstück 29 her. Die Wirkungsweise der vorstehend beschriebenen Entlüftungseinrichtung ist wie folgt:

Bei einer normalen Betriebsbremsung wird Druckluft in den Einlass 31 des Betriebsbremszylinders eingelassen, um die Kolbenstange 37 zum Zwecke der Betätigung der Bremse zu verschieben. Die auf diese Weise innerhalb der Druckkammer 25 bestehende Druckluft wirkt auch auf den durch die Feder 69 in geschlossener Lage gegenüber dem Ventilsitz 63 gehaltenen Ventilkörper 61 ein, d.h. es kann keinerlei Druckluft in die Kammer 75 gelangen, welche gemäss Fig. 2 unmittelbar linksseitig an die Membrane 51 angrenzt. Während dieser Betätigungsphase schliesst also der Ventilkörper 61 gegenüber dem Ventilsitz 63 ab und es kann die normale Betriebsbremsung vollzogen werden, ohne dass ein Druckverlust stattfindet.

Wirkt die Federspeicherbremse als Hilfsbremse (bei Ausfall der Betriebsbremse) oder als Feststellbremse verwendet, dann wird der Druck in der Druckkammer 21 mit Hilfe einer bekannten, an den Einlass 17 angeschlossenen (nicht dargestellten) Ventileinrichtung reduziert, derart, dass die Speicherfeder 11 den Kolben 9 gemäss Fig. 1 nach links gerichtet zu verschieben vermag. Innerhalb der die Speicherfeder 11 aufnehmenden Federkammer 19 entsteht dadurch Unterdruck, da sich das Volumen der Federkammer während der nach links gerichteten Verschiebung (Fig. 1) des Kolbens 9 vergrössert. Während dieser Verschiebung wird der Druck innerhalb der Druckkammer 25 des Betriebsbremszylinders durch schaltungstechnische Massnahmen vorzugsweise zumindest auf Atmosphärendruck gehalten.

Der sich während der Verschiebung des Kolbens 9 bildende Unterdruck in der Federkammer hat zur Folge, dass er über die durch die Lüftungsschlitze 45, die Nut 47 und die Bohrungen 55 bestehende Verbindung auch in der Kammer 75 wirkt. Da innerhalb der Kammer 57 Atmosphärendruck herrscht, wird die Membrane 51 infolge des bestehenden Druckgefälles zwischen der Kammer 75 und der Kammer 57 gemäss Darstellung nach Fig. 2 nach links gerichtet bewegt und verschiebt hierbei den den Ventilkörper 61 tragenden Stössel 59. Der Ventilkörper wird hierbei vom Ventilsitz 63 abgehoben, so dass eine Verbindung zwischen der Kammer 75 und dem atmosphärischen Druck in der Kammer 73, in den Bohrungen 71 und in der Druckkammer 25 geschaffen ist. Auf diese Weise vollzieht sich ein Druckausgleich, d.h. Luft gelangt über die vorgenannte Verbindung aus der Druckkammer 25 in die Kammer 75 und aus dieser über die Lüftungsschlitze 45 in den Kanal 41, bis das Druckgefälle an der Membrane 51 entsprechend Belüftung der Federkammer soweit abgebaut ist, dass die Kraft der Feder 69 wieder überwiegt und diese den Ventilkörper 61 dichtend gegen den Ventilsitz 63 andrückt. Bei sich bewegender Kolbenstange 23 vollzieht sich das Öffnen und Schliessen des Ventilkörpers gegenüber der Verspannung der Feder 69 in vorbeschriebener Weise, bis der jeweils erwünschte Druckausgleich herbeigeführt ist.

Wird die Federspeicherbremse gelöst, indem Druckluft in die Druckkammer 21 eingeleitet wird, dann verbleibt dieser Druck ohne Wirkung gegenüber den herrschenden Druckverhältnissen innerhalb der Entlüftungsvorrichtung, d.h. bei Lösen der Federspeicherbremse, also Rückführung des Kolbens 9, verbleibt der Ventilkörper 61 unter der Verspannung der Feder 69 in dichtender Anlage am Ventilsitz 63. Der sich durch Volumenreduzierung der Federkammer 19 aufbauende Überdruck wird infolgedessen in an sich bekannter Weise über das Druckentlastungsventil 15 abgeblasen und während dieses Abblasens geraten auch gegebenenfalls eingeschlossene Staubteilchen an die Aussenluft.

Die Erfindung ist nicht auf die dargestellte Ausführungsform beschränkt, d.h. die Membrane 51 des aus der Membrane und aus dem Verschlussdeckel 43 gebildeten, luftdicht abgeschlossenen Druckspeichers kann auch mit geeigneten Mitteln direkt mit einem Ventilmechanismus vergleichbarer Funktion verbunden sein, Voraussetzung ist in jedem Falle, dass der durch die Volumenvergrösserung der Federkammer entstehende Unterdruck und der atmosphärische Druck des Druckspeichers gegenseitig zur Wirkung gelangen, um bei Verschiebung der Kolbenstange das zur Entlüftung bzw. Belüftung dienende Ventil zu öffnen, derart, dass der erwünschte Volumenausgleich herbeigeführt wird.

Im dargestellten Ausführungsbeispiel steht der Kanal 41 gemäss Fig. 1 über eine Öffnung 77 mit der Speicherfeder 11 aufnehmenden Federkammer 19 des Federspeicherbremszylinders in Verbindung, so dass die in der Federkammer bestehenden Druckverhältnisse stets auch im Kanal (41) und somit in der Kammer 75 zur Wirkung gelangen; anstelle der dargestellten Öffnung 77 ist es auch möglich, im Bereich des Übergangs von der Kolbenstange 23 in den Kolben 9 eine Bohrung ausreichender Weite vorzusehen usw.

Im Rahmen des der Erfindung eigenen erfinderischen Gedanken ist auch jede andere Ausführungsform eines Druckspeichers verwendbar, d.h. es ist nicht erforderlich, dass die Membrane 51 durch Verschraubung zwischen dem Verschlussdeckel 43 und der Scheibe 53 verspannt und somit gegenüber dem Verschlussdeckel luftdicht abgeschlossen wird, d.h. es kann auch ein bereits fertiger Druckspeicher der beschriebenen Funktionsfähigkeit eingeschraubt oder auf sonstige Weise in das Druckstück eingesetzt werden. In jedem Falle ist es erforderlich, dass innerhalb des Druckspeichers ein Druck gehalten wird, gegebenenfalls auch ein stärkerer Überdruck, welcher gegenüber den Druckverhältnissen in der Kammer 75 zur Wirkung gelangt, um die dadurch ausgelösten Bewegungen der Membrane 51 in Ventilbewegungen umzusetzen.

*Bezugszeichenliste*

| | |
|---|---|
| 1 | Kombizylinder |
| 3 | Betriebsbremszylinder |
| 5 | Federspeicherbremszylinder |
| 7 | Zwischenwand |
| 9 | Kolben |
| 11 | Speicherfeder |
| 13 | Boden |
| 15 | Druckentlastungsventil |
| 17 | Einlass |
| 19 | Federkammer |
| 21 | Druckkammer |
| 23 | Kolbenstange |
| 25 | Druckkammer |
| 27 | Dichtung |
| 29 | Druckstück |
| 31 | Einlass |
| 33 | Membrane |
| 35 | Kolbenstangenkopf |
| 37 | Kolbenstange |
| 39 | Kammer |
| 41 | Kanal |
| 43 | Verschlussdeckel |
| 45 | Lüftungsschlitz |
| 47 | Nut |
| 49 | Sackbohrung |
| 51 | Membrane |
| 53 | Scheibe |
| 55 | Bohrung |
| 57 | Kammer |
| 59 | Stössel |
| 61 | Ventilkörper |
| 63 | Ventilsitz |
| 65 | Bohrung |
| 67 | Federteller |
| 69 | Feder |
| 71 | Bohrung |
| 73 | Kammer |
| 75 | Kammer |
| 77 | Öffnung |

**Patentansprüche**

1. Entlüftungsvorrichtung für einen kombinierten Betriebsbrems- und Federspeicherbremszylinder, insbesondere für Fahrzeugbremsanlagen, mit einem im Federspeicherbremszylinder (5) angeordneten, durch eine Speicherfeder betätigbaren Kolben (9), dessen Kolbenstange (23) hohl ausgebildet ist und an ihrem vorderen, die Zwischenwand (7) zwischen Betriebsbremszylinder und Federspeicherbremszylinder verschiebbar durchsetzenden Ende ein Druckstück (29) trägt, welches bei Bremsbetätigung des Federspeicherbremszylinders auf einen in den Betriebsbremszylinder (3) sich erstreckenden, mit einem Bremsenmechanismus verbundenen Kolbenstangenkopf (35) einzuwirken vermag, mit einer aus der hohlen Kolbenstange in die Federkammer des Federspeicherbremszylinders mündenden Öffnung (77), über welche die Druckbedingungen innerhalb der Federkammer (19) auch in der hohlen Kolbenstange wirken, und mit einem von der Kolbenstange getragenen, die Verbindung zwischen der Federkammer (19) und der Druckkammer (25) des Betriebsbremszylinders (3) öffnenden und schliessenden Ventil, dadurch gekennzeichnet, dass in das Druckstück (29) ein einen vorherbestimmten Druck enthaltender Druckspeicher (43, 51) eingesetzt ist, welcher dem Druck innerhalb der hohlen Kolbenstange (23) ausgesetzt ist und mittels eines entsprechend einem Druckunterschied bewegbaren Betätigungselements (51) auf das Ventil (59, 61, 63) einwirkt.

2. Entlüftungsvorrichtung nach Anspruch 1, dadurch gekennzeichnet, dass der Druckspeicher aus einem eine Kammer (57) aufweisenden Verschlussdeckel (43) und aus einer luftdicht die Kammer (57) abschliessenden Membrane (51) besteht, dass die Aussenseite der Membrane (51) dem Druck innerhalb des Kanals (41) in der Kolbenstange (23) ausgesetzt ist, dass an der Aussenseite der Membrane (51) ein durch Bewegungen der Membrane verschiebbarer, einen Ventilkörper (61) tragender Stössel (59) anliegt, und dass der Ventilkörper mittels einer Feder (69) gegenüber einem Ventilsitz (63) verspannt ist, derart, dass der Ventilkörper bei Betätigung durch die Membrane gegen die Kraft der Feder (69) die Verbindung zwischen dem mit der Federkammer (19) in Verbindung stehenden Kanal (41) und der Druckkammer (25) des Betriebsbremszylinders (3) zu öffnen vermag.

3. Entlüftungsvorrichtung nach Anspruch 2, dadurch gekennzeichnet, dass der Verschlussdeckel (43) in das an der Rückseite hohl ausgebildete Druckstück (29) eingeschraubt ist, wobei die Membrane (51) gegenüber einer den Ventilsitz (63) tragenden Scheibe (53) luftdicht verspannt ist, derart, dass zwischen der Membrane und der Scheibe (53) eine Kammer (75) gebildet ist, welche über Verbindungskanäle (45, 47, 55) ständig an den mit der Federkammer in Verbindung stehenden Kanal (41) angeschlossen ist, dass die Scheibe (53) axialmittig von einer Bohrung (65) durchsetzt ist, deren entgegengesetzt zur Kammer (75) bestehendes Ende den Ventilsitz (63) für den Ventilkörper (61) bildet, dass der den Ventilkörper tragende Stössel (59) durch die Bohrung (65) hindurchgeführt ist, so dass ein Ende an der Membrane (51) anliegt und bei einem Druckunterschied zwischen den Kammern (57, 75) verschiebbar ist, und dass das entgegengesetzte Ende des Stössels durch eine Bohrung im Druckstück (29) geführt ist.

4. Entlüftungsvorrichtung nach Anspruch 2 oder 3, dadurch gekennzeichnet, dass in die den Ventilkörper und den Stössel innerhalb des Druckstücks aufnehmende Kammer (73) seitliche Bohrungen (71) zum Zwecke der Verbindung mit der Druckkammer (25) des Betriebsbremszylinders münden.

5. Entlüftungsvorrichtung nach einem der vorangehenden Ansprüche 2 bis 4, dadurch gekennzeichnet, dass sich ein Ende der Feder (69) mittels eines Federtellers (67) am Ventilkörper (61) abstützt und diesen in Richtung des Ventilsitzes (63) drückt, und dass das entgegengesetzte Ende der Feder (69) im Inneren des Druckstücks abgestützt ist.

**Claims**

1. Ventilation arrangement for a combined service brake and spring-loaded brake cylinder, particularly for brake arrangements of vehicles, having a piston (9) arranged in the spring-loaded brake cylinder (5) and operable by a loaded spring, whose piston rod (23) is of a hollow design and carries at its front end, which displaceably penetrates the partition (7) between the service brake cylinder and spring-loaded brake cylinder, a thrust piece (29) which, when the brake of the spring-loaded brake cylinder is activated, can act on a piston rod head (35) extending into the service brake cylinder (3) and connected to a braking mechanism, having an aperture (77) opening out of the hollow piston rod into the spring pocket of the spring-loaded brake cylinder, via which aperture the pressure conditions inside the spring pocket (19) are also effective in the hollow piston rod, and having a valve carried by the piston rod and opening and closing the connection between the spring pocket (19) and the pressure chamber (25) of the service brake cylinder (3), characterised in that there is inserted into the thrust piece (29) a pressure reservoir (43, 51) having a predetermined pressure, which is subjected to the pressure inside the hollow piston rod (23) and acts on the valve (59, 61, 63) by means of an operating element (51) movable corresponding to the difference in pressure.

2. Ventilation arrangement according to claim 1, characterised in that the pressure reservoir consists of a cover (43) comprising a pocket (57) and a membrane (51) closing off the pocket (57) in an airtight manner, in that the outside of the membrane (51) is subjected to the pressure inside the channel (41) in the piston rod (23), in that a plunger (59) displaceable by movements of the membrane and carrying a valve body (61) abuts the outside of the membrane (51), and in that the valve body is braced by means of a spring (69) against a valve seat (63), in such a way that the valve body, when activated by the membrane against the force of the spring (69), can open the connection between the channel (41) linked with the spring pocket (19) and the pressure reservoir (25) of the service brake cylinder (3).

3. Ventilation arrangement according to claim 2, characterised in that the cover (43) is screwed into the thrust piece (29) of a hollow design at the rear, the membrane (51) being braced in an airtight manner against a disc (53) carrying the valve seat (63) in such a way that there is formed between the membrane and the disc (53) a pocket (75), which is permanently connected via connecting channels (45, 47, 55) to the channel (41) connected to the spring pocket, in that the disc (53) is penetrated through the centre of its axis by a bore (65), whose end opposite to the pocket (75) forms the valve seat (63) for the valve body (61), in that the plunger (59) carrying the valve body is passed through the bore (65), so that one end abuts the membrane (51) and is displaceable in the event of a difference in pressure between the pockets (57, 75), and in that the opposite end of the plunger is guided through a bore in the thrust piece (29).

4. Ventilation arrangement according to claim 2 or 3, characterised in that lateral bores (71) open into the pocket (73) receiving the valve body and the plunger inside the thrust piece to effect connection to the pressure chamber (25) of the service brake cylinder.

5. Ventilation arrangement according to one of the above claims 2 to 4, characterised in that one end of the spring (69) is supported on the valve body (61) by means of a spring plate (67) and pushes this in the direction of the valve seat (63), and in that the opposite end of the spring (69) is supported inside the thrust piece.

**Revendications**

1. Dispositif de mise à l'atmosphère pour un cylindre combiné de frein de service et de frein à ressort accumulateur, en particulier pour des installations de freinage de véhicules, avec un piston (9) disposé dans le cylindre de frein à ressort accumulateur (5), susceptible d'être commandé par un ressort accumulateur et dont la tige de piston (23) est réalisée de façon creuse et porte, à son extrémité antérieure qui traverse en coulissant la paroi intermédiaire (7) entre le cylindre de frein de service et le cylindre de frein à ressort accumulateur, une pièce de pression (29) qui est capable, lors de l'actionnement du frein du cylindre de frein à ressort accumulateur, d'agir sur une tête de tige de piston (35) qui s'étend dans le cylindre de frein de service (3) et qui est reliée à un mécanisme de frein, avec une ouverture (77) débouchant de la tige de piston creuse dans la chambre à ressort du cylindre de frein à ressort à accumulateur et par l'intermédiaire de laquelle les conditions de pression dans la chambre à ressort agissent également dans la tige de piston creuse, et avec une soupape portée par la tige de piston et ouvrant et fermant la liaison entre la chambre à ressort (19) et la chambre de pression (25) du cylindre de frein de service (3), caractérisé par le fait que dans la pièce de pression (29) est monté un accumulateur de pression (43, 51) contenant une pression prédéterminée, lequel accumulateur de pression est exposé à la pression qui règne dans la tige de piston creuse (23) et agit, par l'intermédiaire de l'élément de commande (51) susceptible d'être déplacé en fonction d'une différencé de pression, sur la soupape (59, 61, 63).

2. Dispositif de mise à l'atmosphère selon la revendication 1, caractérisé par le fait que l'accumulateur de pression est constitué par un couvercle de fermeture (43) comportant une chambre (57) et par une membrane (51) obturant de façon étanche la chambre (57), que le côté extérieur de la membrane (51) est exposé à la pression qui règne dans le canal (41) situé à l'intérieur de la tige de piston (23), que sur le côté extérieur de la membrane (51) porte un poussoir (59) portant un corps de soupape (61) et déplaçable par les mouvements de la membrane, et que le corps de soupape est serré à l'aide d'un ressort (69) contre un siège de soupape (63) de telle manière que le corps de soupape, lors de la commande dans la membrane, à l'encontre du ressort (69), est capable d'ouvrir la liaison entre le canal (41) en liaison avec la chambre à ressort (19) et la chambre de pression (25) du cylindre de frein de service (3).

3. Dispositif de mise à l'atmosphère selon la revendication 2, caractérisé par le fait que le couvercle de fermeture (43) est vissé dans la pièce de pression (29) réalisée de façon creuse sur le côté postérieur, la membrane (51) étant serrée de façon étanche à l'air contre un disque (51) portant le siège de soupape (63) de manière que se forme, entre la membrane et le disque (53), une chambre (75) qui, par l'intermédiaire de canaux de liaison (45, 47, 55), est en permanence reliée au canal (41) qui est en liaison avec la chambre à ressort, que le disque (53) est traversé en position centrale par un perçage (65) dont l'extrémité qui est éloignée de la chambre (75) forme le siège de soupape (63) pour le corps de soupape (61), que le poussoir (59) qui porte le corps de soupape est guidé à travers le perçage (65) de manière que l'extrémité porte contre la membrane et soit déplaçable dans le cas d'une différence de pression entre les chambres (57, 75), et que l'extrémité opposée du poussoir est guidée dans un perçage ménagé dans la pièce de pression (29).

4. Dispositif de mise à l'atmosphère selon les revendications 2 ou 3, caractérisé par le fait que dans la chambre (73) qui reçoit le corps de soupape et le poussoir debouchent des perçages latéraux (71) servant à la liaison avec la chambre de pression (25) du cylindre de frein de service.

5. Dispositif de mise à l'atmosphère selon l'une des revendications antérieures 2 à 4, caractérisé par le fait que l'extrémité du ressort (69) prend appui, à l'aide d'une cuvette à ressort (67), sur le corps de soupape (61) et refoule ce dernier en direction du siège de soupape (63), et que l'extrémité opposée du ressort (69) prend appui à l'intérieur de la pièce de pression.

Fig.1

0 025 558

Fig.2